# DEMANDE DE BREVET EUROPEEN

(11) **EP 1 925 498 A1**
(43) Date de publication de la demande: **28.05.2008**
(21) Numéro de dépôt: 07291370.0
(22) Date de dépôt: 15.11.2007
(51) Int. Cl.: B60Q 3/02, F21V 5/00, F21V 7/00, F21S 8/10, F21W 101/08, F21Y 101/02

(54) **Dispositif d'éclairage tel qu'une liseuse à diode électroluminescente**

(30) Priorité: 21.11.2006 FR 0610184
(71) Demandeur: C.E.I.T. Entreprises, 86200 Loudun (FR)
(72) Inventeur: Sibout, Michel, 86200 Loudun (FR)
(74) Mandataire: Fosse, Danièle

(57) **Abrégé**

L'invention concerne un dispositif d'éclairage tel qu'une liseuse, destiné à être utilisé en particulier dans un véhicule.

L'invention consiste en ce qu'il comporte une diode électroluminescente unique ainsi que des moyens d'alimentation internes propres à générer un courant vers ladite diode électroluminescente (7) unique, lesdits moyens d'alimentation internes étant raccordables à un réseau électrique externe, le dispositif comportant en outre une optique (3) propre à recentrer et focaliser le flux lumineux émis par la diode électroluminescente (7) unique.

Application aux voitures ferroviaires.

## Description

La présente invention concerne le domaine des éclairages dans des espaces tels que des véhicules. Plus particulièrement, la présente invention porte sur un dispositif d'éclairage tel qu'une liseuse à diode électroluminescente.

Depuis de nombreuses années, la majorité des moyens de transport (avion, train, tramway, voiture...) sont équipés de système d'éclairage individuel. Cet éclairage individuel, encore appelé liseuse, est réalisé à l'aide de lampe pourvue d'ampoule à incandescence. Ces liseuses sont alimentées directement à partir de la tension de service du véhicule. Le principal désavantage de ce système réside dans le fait que les ampoules à incandescence ont une durée de vie courte et nécessitent un changement régulier ce qui accroît le coût de la maintenance d'une telle installation et nuit au confort des usagers. Pour pallier ces désavantages, on a proposé de remplacer ces dispositifs d'éclairage par un dispositif d'éclairage à diode électroluminescente. En effet, les diodes électroluminescentes plus connues sous l'appellation de « LED » ont une durée de vie nettement accrue en comparaison aux ampoules à incandescence et leur consommation est très inférieure à ces ampoules à incandescence. L'alimentation de ces liseuses est généralement une alimentation déportée utilisée pour plusieurs liseuses à la fois. Bien que le coût d'entretien de ce type de liseuse soit nettement réduit par rapport à la technique précédente, cette configuration comporte plusieurs défauts. D'une part, en cas de panne d'alimentation, toutes les liseuses connectées à cette alimentation déportée ne fonctionnent plus et d'autre part, le remplacement des liseuses à ampoule à incandescence par des liseuses à LED ne peut se faire sans modifier une partie du câblage électrique d'alimentation du véhicule. Le branchement de la liseuse à LED directement en lieu et place de la lampe à incandescence est impossible du fait d'une incompatibilité de tensions. En effet, la tension du câblage du véhicule tel qu'une voiture de train, est bien trop élevée par rapport à la tension maximale acceptée par une LED, et il est donc indispensable d'adapter cette tension et par conséquent de modifier le câblage de la voiture. Ceci nécessite une intervention lourde, complexe et un coût important.

Comme cela est bien connu, le plus souvent les lampes à LED fonctionnent selon deux états, soit éteint soit allumé avec pleine puissance de luminosité. Par conséquent, un utilisateur peut seulement allumer ou éteindre une telle liseuse et ne peut pas faire varier la luminosité mais peut modifier l'orientation du flux lumineux pour le diriger de sorte à éviter d'incommoder les autres occupants du véhicule. Aussi dans le document US 2006/0146553, on propose donc de résoudre ce problème avec une liseuse à intensité variable. Une telle liseuse à variation de lumière avec éclairage de sécurité est destinée notamment à équiper des véhicules, en particulier des avions. Une telle liseuse comporte un boîtier pour relier ladite liseuse à une partie intérieure de véhicule et une unité de remplacement de champ (FRU). Cette dernière comprend un module d'alimentation incluant une interface d'alimentation pour recevoir une alimentation opérationnelle depuis une source d'alimentation, un module d'éclairage comprenant une pluralité de LED et un module de commande qui comprend une interface de commande pour recevoir un signal d'entrée d'utilisateur de sorte que le module de commande peut faire varier l'intensité d'éclairage émise par les LED selon le signal de l'utilisateur. Par ailleurs, ce module d'alimentation peut être pourvu d'une protection d'alimentation comme un fusible, un relais...permettant ainsi de protéger la liseuse. Le module d'alimentation peut contenir des moyens de conversion d'alimentation permettant d'avoir une alimentation adaptée pour les LED et le module de commande. Les moyens d'alimentation et de contrôle sont implantés sur une carte à circuit imprimé disposée à l'intérieur de l'unité de remplacement mais au moins un d'entre eux peut être disposé à l'extérieur de celle-ci. La carte à circuit imprimé comprend un contrôleur tel qu'un microprocesseur. De plus, la FRU peut contenir un capteur de température permettant d'augmenter sa durée. En un mode de réalisation particulier, ce capteur de température peut être sur la carte à circuit imprimé pour mesurer la température à l'intérieur du dissipateur de chaleur et protéger le contrôleur. Le module d'alimentation peut avoir deux interfaces et peut contenir un convertisseur DC/DC et un régulateur de tension.

Dans US 2002/01455871, on a proposé une lampe pour cabine constituée d'un boîtier à paroi sphérique installé sur un panneau et capable de rotation. Une carte à circuit imprimé porte des LED qui sont chacune pourvues d'une portion de réflexion concave, lesdites portions étant formées dans une unité réflectrice. Un connecteur est relié d'un côté à un cordon électrique pour apporter de l'électricité aux LED et de l'autre à des broches qui font saillie d'un élément cylindrique fait d'un métal conducteur, à l'extrémité duquel un appareil d'alimentation est prévu. Une telle lampe présente une bonne interchangeabilité avec les lampes de cabine utilisant des ampoules à incandescence. Un dissipateur de chaleur est ajouté sur la face arrière de la carte à circuit imprimé. Ce dispositif comporte des portions de condensateur et à l'aide des portions concaves de réflexion et des dispositifs grand angle, on obtient une lumière diffuse adaptée pour lire. Une distribution contrôlée de la lumière est obtenue en contrôlant la lumière par un condensateur et des moyens de diffusion. Chaque unité réflectrice est constituée de parois concaves en aluminium pouvant éventuellement être remplie de résine transparente formant une partie de retrait central avec surface convexe pour condenser le flux lumineux de la LED.

Chacune des liseuses présentées ci-dessus présente donc toujours une pluralité de LED utilisées pour former un dispositif d'éclairage individuel. Comme on l'a vu l'une proposant de régler l'intensité lumineuse de l'ensemble des LED et l'autre proposant de contrôler le flux lumineux de chaque LED en vue de former un projecteur à faisceau concentré pour réaliser une lumière diffuse illuminant une zone d'environ 50 cm de diamètre à environ 1 mètre de la surface avant de la lampe. Par conséquent, il ressort de ces liseuses, qu'il apparaît nécessaire de prévoir à chaque fois, un certain nombre de LED pour permettre un éclairage suffisant.

Le but de la présente invention est de fournir un dispositif d'éclairage tel qu'une liseuse à LED qui est susceptible d'être installée à la place d'une liseuse à lampe sans avoir besoin d'intervenir sur le câblage d'alimentation du véhicule mais qui en outre présente l'avantage de présenter un caractère de compacité amélioré, en particulier en présentant un nombre d'éléments la constituant plus limité et de fait une liseuse plus économique tout en offrant des qualités d'éclairage optimales.

A cet effet, l'invention a pour objet un dispositif d'éclairage tel qu'une liseuse, destiné à être utilisé en particulier dans un véhicule, caractérisé en ce qu'il comporte une diode électroluminescente unique ainsi que des moyens d'alimentation internes propres à générer un courant vers ladite diode électroluminescente unique, lesdits moyens d'alimentation internes étant raccordables à un réseau électrique externe, le dispositif comportant en outre une optique propre à recentrer et à focaliser le flux lumineux émis par la diode électroluminescente unique.

Ainsi, de manière avantageuse, les moyens d'alimentation internes ou encore intégrés prévus dans ledit dispositif d'éclairage selon l'invention permettent de connecter ledit dispositif directement sur un réseau électrique externe tel que le réseau électrique existant dans le véhicule et délivrant par exemple dans le cas d'une voiture ferroviaire, une tension dite de service, entre 16 et 30V (24 V), entre 50 et 90 V (72 V) ou encore entre 90 et 150 V (110 V) en courant continu alors qu'une diode électroluminescente fonctionne sous une tension d'environ 4 V.

En outre, de manière particulièrement avantageuse, le dispositif selon l'invention permet d'obtenir à l'aide d'une seule diode et d'une optique, un faisceau lumineux présentant un nombre de lux suffisant (environ 100 lux) à la distance souhaitée, distance entre le dispositif et un utilisateur, soit environ 90 cm tout en n'utilisant qu'une seule diode électroluminescente. Ainsi, le dispositif d'éclairage selon l'invention offre une amélioration du rendement lumineux tout en étant plus économique et plus simple à réaliser puisque n'utilisant qu'une seule diode électroluminescente.

De manière avantageuse, les moyens d'alimentation internes sont constitués au moins de moyens de transformation de tension de service, d'un générateur de courant reliable à la LED et de moyens de connexion audit réseau électrique externe, tous reçus sur au moins un circuit imprimé. Les moyens de transformation de la tension du réseau externe et les moyens de génération d'un courant vers la LED sont constitués de composants électroniques classiques tels que transistors, selfs condensateurs, résistances, circuit intégré à découpage, etc., choisis de manière appropriée en fonction du réseau électrique externe et de la tension qu'il délivre, sur lequel la liseuse selon l'invention est raccordable.

Un tel dispositif d'éclairage tel qu'une liseuse comporte un corps en polycarbonate ou en aluminium ou toutes autres matières appropriés pouvant se présenter sous la forme d'une sphère lorsque la liseuse est orientable, lequel corps renferme une diode électroluminescente unique, les moyens d'alimentation internes, ainsi qu'une optique en matériau approprié tel qu'en polyméthacrylate de méthyle (PMMA), en verre, permettant la diffusion homogène du flux lumineux émis par la LED unique. De préférence, l'optique est constituée d'une structure optique complexe.

Selon une première forme de réalisation de l'invention, le dispositif selon l'invention comporte un circuit imprimé sur lequel sont reçus les moyens d'alimentation internes et sur lequel est reçue également la LED. En effet, le dispositif d'éclairage ne comportant plus qu'une seule diode électroluminescente, on libère sur le circuit imprimé un espace d'utilisation pour la mise en place des autres composants notamment des moyens d'alimentation internes, permettant de réaliser un dispositif compact.

Selon une autre forme de réalisation de l'invention, le dispositif selon l'invention comporte deux circuits imprimés, le premier comportant la LED et une partie des moyens d'alimentations et le second circuit imprimé comportant l'autre partie des moyens d'alimentation. Un tel dispositif permet de conserver le caractère de compacité au dispositif d'éclairage selon l'invention lui permettant donc de pouvoir être installé à la place d'une liseuse à lampe à incandescence sans avoir besoin de modifier le câblage électrique existant du véhicule ou d'ajouter un convertisseur déporté. Mais il permet de couvrir également jusqu'à 230V en courant alternatif ou 150 V en courant continu puisque les moyens d'alimentation internes portés sur le second circuit imprimé doivent juste être adaptés au réseau électrique avec lequel ils sont destinés à fonctionner.

L'alimentation interne ou encore alimentation intégrée dudit dispositif d'éclairage selon l'invention permet donc à ce dispositif d'éclairage de pouvoir être installé à la place d'une liseuse à lampe à incandescence sans avoir besoin de modifier le câblage électrique existant du véhicule ou d'ajouter un convertisseur déporté. On peut ainsi couvrir l'intégralité des demandes d'éclairage dans le domaine des transports (par exemple 24 Vdc, 72 Vdc, 110 Vdc, 120Vac, 230Vac) puisque les moyens d'alimentation internes doivent juste être adaptés au réseau électrique avec lequel ils sont destinés à fonctionner. De plus, chaque liseuse est indépendante et peut être changée isolément lorsqu'elle ne fonctionne plus. En outre, la puissance de l'alimentation consommée est en rapport avec la puissance lumineuse demandée par les utilisateurs et elle se situe souvent aux alentours de 3 Watts.

Selon une forme de réalisation préférée, le dispositif d'éclairage selon l'invention peut également comporter des moyens pour dissiper la chaleur générée par la LED, tels qu'un dissipateur en aluminium, reçu par le circuit imprimé. Le dissipateur sert alors de support au premier circuit imprimé ce qui renforce encore le caractère compact du dispositif selon l'invention.

De manière encore plus préférée, on peut prévoir un capteur de température au sein du dispositif d'éclairage reçu par le circuit imprimé de sorte qu'en cas d'élévation trop élevée de la température (par exemple au-dessus de 80°C) au sein du dispositif, on commande la coupure des moyens d'alimentation internes.

En outre, le dispositif d'éclairage peut comporter des moyens complémentaires pour dissiper la chaleur générée par la LED. Ces moyens sont constitués d'orifices ménagés dans le corps du dispositif d'éclairage, de préférence autour de l'optique et propres à mettre en communication l'intérieur dudit corps et l'environnement extérieur générant ainsi une mise à l'air de l'intérieur du dispositif. De préférence, une membrane est en outre prévue, perméable à l'air mais retenant les poussières.

La présente invention est de préférence mise en oeuvre dans des véhicules de type voiture de train. Cependant, ce genre de liseuse à LED à alimentation intégrée peut être adaptée à plusieurs types de véhicule transportant des passagers et nécessitant un éclairage individuel tel que le train, le tramway, l'avion, le bateau (ferry...), le car ou la voiture individuelle.

Les liseuses à LED à alimentation intégrée selon l'invention peuvent être de plusieurs formes. Elles sont adaptables à l'esthétique et au design du véhicule. Elles peuvent être fixes ou orientables selon le type de véhicule auquel elles sont ajoutées.

La lumière diffusée pourra être « blanc froid » ou « blanc chaud » selon la nature de la LED utilisée.

On décrira maintenant l'invention plus en détail en référence aux dessins dans lesquels
la figure 1 est une vue en coupe schématique d'un exemple de liseuse à LED selon la première forme de réalisation de l'invention,
la figure 2 représente une vue en perspective avant d'une variante de la liseuse selon la figure 1
La figure 3 représente une vue en perspective latérale de la liseuse de la figure 2,
la figure 4a représente une vue en plan de l'optique de la liseuse selon l'invention ;
la figure 4b représente une vue en coupe de l'optique de la figure 4a selon la ligne A-A ; et
la figure 4c représente une vue en perspective de l'optique de la figure 4a.

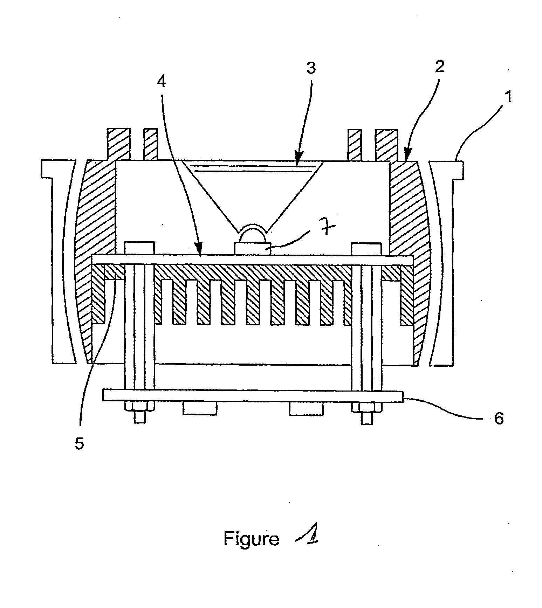

Le dispositif d'éclairage selon l'invention ou liseuse à LED représenté à la figure 1, comporte un corps ou boîtier présentant la forme d'une sphère 2 portant l'optique 3. Un support de sphère 1 reçoit ladite sphère 2. A l'intérieur de cette sphère 2 sont également montés les moyens d'alimentation internes du dispositif d'éclairage portés par un circuit imprimé 4 sur lequel est reçu une diode électroluminescente 7 unique. Les moyens de connexion 6 formant la connectique sur le réseau électrique externe sont également reçus par le circuit imprimé 4 de sorte à se trouver au dos de la liseuse. Les moyens de transformation de la tension du réseau externe et les moyens de génération d'un courant vers la LED sont constitués de composants électroniques classiques tels que transistors, selfs-condensateurs, résistances, circuit intégré à découpage, etc., choisis de manière appropriés en fonction du réseau électrique externe sur lequel la liseuse est raccordable.

Un dissipateur de chaleur 5 pour permettre l'évacuation de la chaleur est de préférence monté en compression avec le circuit imprimé 4, au dos de celui-ci, pour évacuer un maximum de chaleur. Les moyens de connexion ou connectique 6, positionnés au dos de la liseuse, permettent l'alimentation de celle-ci par un branchement direct de ladite liseuse sur le câblage électrique ou le réseau d'alimentation existant du véhicule. Cette disposition présente l'avantage de pouvoir être montée directement sur le câblage existant du véhicule sans nécessiter de modifications dudit câblage.

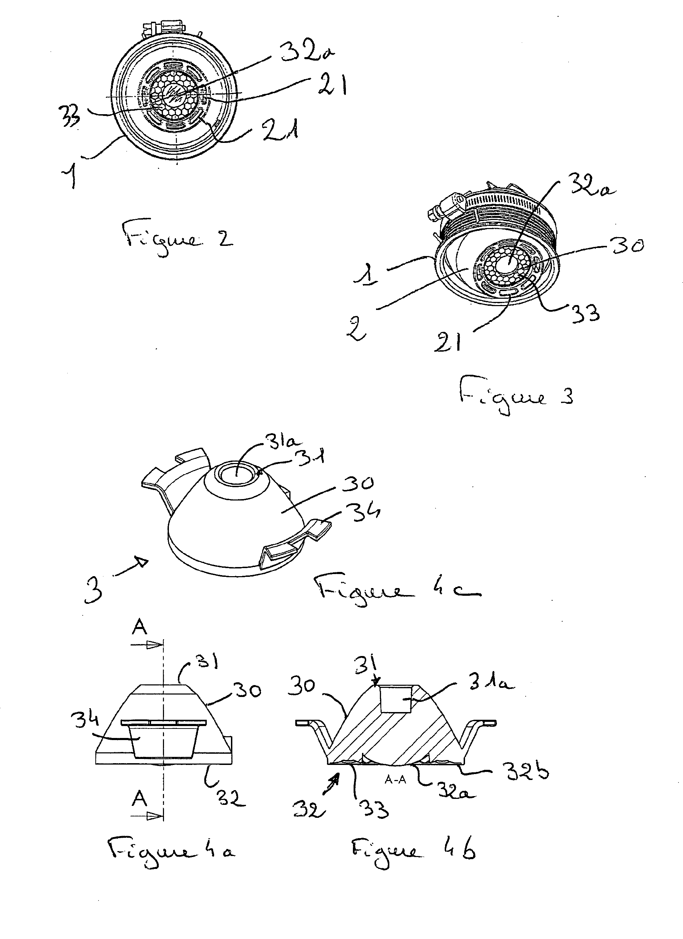

Le corps ou boîtier 2 comme on peut le voir à la figure 2 présente des orifices 21 ménagés de manière à se trouver à la périphérie de l'optique 3. Ces orifices 21 permettent une mise en communication de l'intérieur du corps 2 avec l'environnement extérieur et participent ainsi à l'évacuation de la chaleur en tant que moyens complémentaires pour dissiper la chaleur.

L'optique 3 est constituée de polyméthacrylate de méthyle (PMMA) permettant la diffusion homogène du flux lumineux émis par la LED unique. Cette optique présente une structure complexe monobloc de section circulaire comportant une surface 31 dans laquelle est ménagé un volume en tronc de cône 31a dans lequel peut se loger la LED 7. Une surface 32 opposée à ladite première surface 31 présente une partie centrale continue 32a en regard du volume 31a formant une lentille asphérique et une partie périphérique 32b constituée de microlentilles 33 asphériques selon un réseau hexagonal en nid d'abeille. Une partie réflecteur 30 est ménagée dans cet optique monobloc présentant une surface asphérique, quasi parabolique s'étendant entre les deux surfaces.

Ainsi, les rayons émis par la LED 7 et traversant la paroi du logement tronconique 31 a sont ensuite réfléchis par la partie réflecteur 30 puis réfractés par la partie périphérique pourvue des microlentilles asphériques tandis que les rayons de la LED 7 traversant la base du logement 31a sont réfractés par la partie centrale asphérique 32a.

Des pattes 34 sont ménagées dans ce complexe monobloc 3 pour aider à sa fixation dans la liseuse.

Une telle optique complexe permet avantageusement de recentrer les rayons émis par la LED 7 et de les focaliser pour constituer une surface lumineuse d'intensité suffisante pour constituer un éclairage de véhicules à la distance souhaitée correspondant à une distance moyenne entre le dispositif d'éclairage et un passager de véhicule.

L'invention n'est bien entendu pas limitée à l'exemple décrit ci-dessus mais englobe toutes les formes de réalisation prévues dans les revendications dépendantes.

## Revendications

1. Dispositif d'éclairage tel qu'une liseuse, destiné à être utilisé en particulier dans un véhicule,
**caractérisé en ce qu'**il comporte une diode électroluminescente unique ainsi que des moyens d'alimentation internes propres à générer un courant vers ladite diode électroluminescente (7) unique, lesdits moyens d'alimentation internes étant raccordables à un réseau électrique externe, le dispositif comportant en outre une optique (3) propre à recentrer et focaliser le flux lumineux émis par la diode électroluminescente (7) unique.

2. Dispositif selon la revendication 1,
**caractérisé en ce que** les moyens d'alimentation internes sont constitués au moins de moyens de transformation de tension de service, d'un générateur de courant reliable à la LED (diode délectroluminescente) (7) et de moyens de connexion (6) audit réseau électrique externe, tous reçus sur au moins un circuit imprimé (4).

3. Dispositif selon la revendication 1 ou 2,
**caractérisé en ce que** les moyens de transformation de la tension du réseau externe et les moyens de génération d'un courant vers la diode électroluminescente (7) sont constitués de composants électroniques classiques tels que transistors, selfs, condensateurs, résistances, circuit intégré à découpage, etc., choisis de manière appropriée en fonction du réseau électrique externe et de la tension qu'il délivre, sur lequel la liseuse est raccordable.

4. Dispositif selon l'une des revendications 1 à 3,
**caractérisé en ce qu'**il comporte un corps (2) tel qu'en polycarbonate, en aluminium, renfermant la diode électroluminescente (7), les moyens d'alimentation internes ainsi que l'optique (3) en matériau approprié tel qu'en polyméthacrylate de méthyle (PMMA), en verre..

5. Dispositif selon la revendication 4,
**caractérisé en ce que** le corps se présente sous la forme d'une sphère (2) reçue dans un support de sphère (1) lorsqu'il est orientable.

6. Dispositif selon la revendication 4,
**caractérisé en ce que** l'optique (3) est constituée d'une structure optique complexe monobloc comportant une première surface (31) dans laquelle est ménagé un volume en tronc de cône (31a) dans lequel peut se loger la LED (7), une surface (32) opposée à ladite première surface (31) présentant une partie centrale continue (32a) en regard dudit volume (31a) formant une lentille asphérique et une partie périphérique (32b) constituée de microlentilles asphériques (33) selon un réseau hexagonal en nid d'abeille, ladite structure complexe (3) comportant une partie réflecteur présentant une surface asphérique (30), quasi parabolique entre les deux surfaces (31, 32).

7. Dispositif selon l'une des revendications 1 à 6,
**caractérisé en ce que** la diode électroluminescente (7) est reçue directement par ledit circuit imprimé (4) des moyens d'alimentation internes.

8. Dispositif selon l'une des revendications 1 à 6,
**caractérisé en ce que** le dispositif comporte deux circuits imprimés, le premier comportant la LED et une partie des moyens d'alimentations et le second circuit imprimé comportant l'autre partie des moyens d'alimentation.

9. Dispositif selon l'une des revendications 1 à 8,
**caractérisé en ce qu'**il comporte des moyens pour dissiper la chaleur générée par la diode électroluminescente (7), tels qu'un dissipateur (5) en aluminium, reçu par le circuit imprimé (4).

10. Dispositif selon la revendication 9,
**caractérisé en ce qu'**il comporte des moyens complémentaires pour dissiper la chaleur qui sont constitués d'orifices ménagés dans le corps du dispositif d'éclairage, de préférence autour de l'optique et propres à mettre en communication l'intérieur dudit corps et l'environnement extérieur générant ainsi une mise à l'air de l'intérieur du dispositif.

11. Dispositif selon la revendication 10,
**caractérisé en ce qu'**une membrane est en outre prévue, au niveau desdits orifices, perméable à l'air mais retenant les poussières.

12. Dispositif selon la revendication 11,
**caractérisé en ce qu'**il comporte un capteur de température reçu par le circuit imprimé de sorte qu'en cas d'élévation trop élevée de la température, on commande la coupure des moyens d'alimentation internes.
